(19) Europäisches Patentamt / European Patent Office / Office européen des brevets

(11) **EP 4 316 810 A1**

(12) **EUROPEAN PATENT APPLICATION**
published in accordance with Art. 153(4) EPC

(43) Date of publication:
**07.02.2024  Bulletin 2024/06**

(21) Application number: **22775505.5**

(22) Date of filing: **18.03.2022**

(51) International Patent Classification (IPC):
**B32B 27/00** (2006.01)    **B32B 3/30** (2006.01)
**E04F 15/02** (2006.01)

(52) Cooperative Patent Classification (CPC):
**B32B 3/30; B32B 27/00; E04F 15/02**

(86) International application number:
**PCT/JP2022/012868**

(87) International publication number:
**WO 2022/202718 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2021   JP 2021047693**

(71) Applicant: DAI NIPPON PRINTING CO., LTD.
**Tokyo 162-8001 (JP)**

(72) Inventors:
• KAYAHARA, Toshinaru
  Tokyo 162-8001 (JP)
• IWATA, Shinji
  Tokyo 162-8001 (JP)
• NAKAJIMA, Tomomi
  Tokyo 162-8001 (JP)
• ARAKIDA, Jin
  Tokyo 162-8001 (JP)

(74) Representative: **Müller-Boré & Partner
Patentanwälte PartG mbB
Friedenheimer Brücke 21
80639 München (DE)**

(54) **DECORATIVE SHEET AND DECORATIVE PANEL**

(57)    The present invention provides a decorative sheet having excellent anti-slip properties, anti-slip durability, impact resistance, and stain resistance, and also having excellent designability. The present invention provides a decorative sheet having a surface-protecting layer on its outermost surface, (1) the surface-protecting layer having a Martens hardness of 30 to 170 N/mm$^2$, the Martens hardness being a value measured in such a manner that when the surface-protecting layer contains fine particles, a diamond indenter is pressed into a position avoiding the fine particles to measure the Martens hardness of a cross-section, (2) the surface-protecting layer having irregularities, the irregularities having an embossed shape with a pebbly pattern, a wood-grain pattern, a wooden pattern, a marble grain pattern, or a leather pattern, and the irregularities having an average interval Sm of 180 $\mu$m to 950 $\mu$m, (3) the surface-protecting layer having a maximum height Rz of 10 to 45 $\mu$m, and (4) the surface-protecting layer having a ratio of the area of a portion from the surface to a depth of 30 $\mu$m of 40% or more.

Fig. 1

**Description**

Technical Field

The present invention relates to a decorative sheet and a decorative plate.

Background Art

Decorative sheets are used by being bonded to the surfaces of wood boards, plastic boards, etc. for the purpose of surface protection, decoration, and the like. Decorative plates obtained thereby are used for various building materials, furniture, and the like.

Conventional decorative sheets generally have smooth surfaces. Therefore, when such a decorative sheet is used as a floor material for flooring, stairs, etc., it is slippery when people walk on it, and there is a concern that people will fall over.

Accordingly, for the purpose of imparting anti-slip properties to the surface of a decorative sheet, a decorative sheet for floors has been proposed, in which a plurality of projection parts are formed on the surface, the cross-sectional shape of the projection part in the height direction is trapezoidal or conical, the shape of the projection part in a plan view is polygonal, and the projection parts have a specific size range (PTL 1).

However, the floor material of PTL 1 has the problem of insufficient anti-slip properties. When a decorative sheet with a surface-protecting layer containing a filler, or a decorative sheet with embossing is used, the surface of the filler is scraped off. Thus, there is a problem that the specific surface unevenness disappears, which gradually reduces anti-slip properties.

Since decorative sheets are bonded to the surfaces of wood boards, plastic boards, etc., they may be hit by objects. Therefore, decorative sheets are required to have impact resistance. They are also required to be easy to wipe off when dirt adheres to the surface, and stain resistance is also required.

Further, since decorative sheets are used by being bonded to the surfaces of articles for the purpose of decoration, they are required to have excellent designability. In the decorative sheet for floors disclosed in PTL 1, the projection parts have a polygonal shape; thus, this sheet can be clearly determined as a plastic industrial product, and there is the problem of inferior designability.

Accordingly, there is a demand for the development of decorative sheets having excellent anti-slip properties, anti-slip durability, impact resistance, and stain resistance, and also having excellent designability.

Citation List

Patent Literature

PTL 1: JP6606901B

Summary of Invention

Technical Problem

A primary object of the present invention is to provide a decorative sheet having excellent anti-slip properties, anti-slip durability, impact resistance, and stain resistance, and also having excellent designability.

Solution to Problem

As a result of extensive research, the present inventor found that the above object can be achieved by a decorative sheet having a surface-protecting layer on its outermost surface, a surface of the surface-protecting layer satisfying specific conditions. Thus, the present invention has been completed.

Specifically, the present invention relates to the following decorative sheet and decorative plate.

    1. A decorative sheet having a surface-protecting layer on its outermost surface,

        (1) the surface-protecting layer having a Martens hardness of 30 to 170 N/mm$^2$, the Martens hardness being a value measured in such a manner that when the surface-protecting layer contains fine particles, a diamond indenter is pressed into a position avoiding the fine particles to measure the Martens hardness of a cross-section,
        (2) the surface-protecting layer having irregularities, the irregularities having an embossed shape with a pebbly pattern, a wood-grain pattern, a wooden pattern, a marble grain pattern, or a leather pattern, and the irregularities having an average interval Sm of 180 $\mu$m to 950 $\mu$m,

(3) the surface-protecting layer having a maximum height Rz of 10 to 45 pm, and

(4) the surface-protecting layer having a ratio of the area of a portion from the surface to a depth of 30 $\mu$m of 40% or more.

2. The decorative sheet according to Item 1, which has a Martens hardness of 70 to 150 N/mm$^2$.

3. The decorative sheet according to Item 1 or 2, wherein Rz is 10 to 19 $\mu$m.

4. The decorative sheet according to any one of Items 1 to 3, wherein Sm is 450 to 750 $\mu$m.

5. The decorative sheet according to any one of Items 1 to 4, wherein the surface-protecting layer has a ratio of the area of a portion higher than a depth of 30 $\mu$m from the surface of 50 to 90%.

6. The decorative sheet according to any one of Items 1 to 5, wherein the surface-protecting layer has a ratio of the area of a portion higher than a depth of 30 $\mu$m from the surface of 60 to 85%.

7. The decorative sheet according to any one of Items 1 to 6, wherein the surface-protecting layer comprises an ionizing radiation-curable resin.

8. The decorative sheet according to any one of Items 1 to 7, wherein the surface-protecting layer has a thickness of 10 to 40 $\mu$m.

9. The decorative sheet according to any one of Items 1 to 8, wherein the surface-protecting layer comprises at least one member selected from the group consisting of antibacterial agents, antiviral agents, and anti-allergen agents.

10. The decorative sheet according to any one of Items 1 to 9, which has a picture pattern layer, a transparent resin layer, and the surface-protecting layer in sequence on a base material sheet.

11. The decorative sheet according to any one of Items 1 to 9, which has a picture pattern layer, a transparent resin layer, and the surface-protecting layer in sequence on a base material sheet, wherein at least a backer layer is laminated on a back surface of the base material sheet.

12. A decorative plate comprising the decorative sheet according to any one of Items 1 to 11 on a base material.

13. The decorative plate according to Item 12, wherein the base material is a single wood panel, a plywood panel, a wood fiberboard, or a particleboard.

Advantageous Effects of Invention

The decorative sheet of the present invention has excellent anti-slip properties, anti-slip durability, impact resistance, and stain resistance, and also has excellent designability. Therefore, decorative plates laminated with the decorative sheet of the present invention can be used for various building materials, furniture, and the like.

Brief Description of Drawings

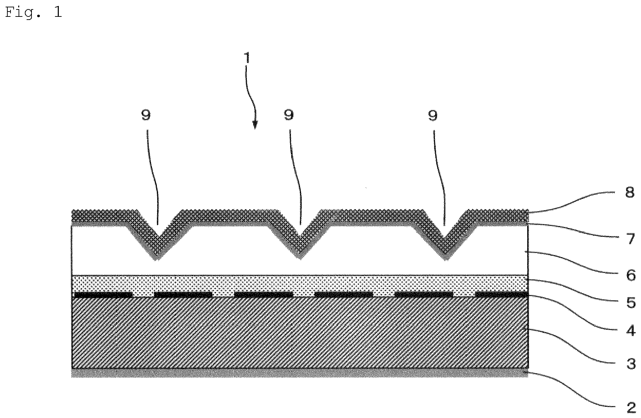

Fig. 1 is a schematic view (cross-sectional view) of the decorative sheet of the present invention.
Fig. 2 shows a diamond indenter (a) used in the measurement of the Martens hardness in this specification, a schematic view of indentation operation (b), and an example of indentation load and displacement (c).
Fig. 3 shows the measured cross-sectional curve of the decorative sheet produced in Example 4.
Fig. 4 shows the location at which the measured cross-sectional curve was measured in Example 4.
Fig. 5 shows the measurement results of the volume area 1 of the decorative sheet produced in Example 4.
Fig. 6 shows the measurement results of the volume area 2 of the decorative sheet produced in Example 4.
Fig. 7 shows the measured cross-sectional curve of the decorative sheet produced in Example 7.
Fig. 8 shows the location at which the measured cross-sectional curve was measured in Example 7.
Fig. 9 shows the measurement results of the volume area 1 of the decorative sheet produced in Example 7.
Fig. 10 shows the measurement results of the volume area 2 of the decorative sheet produced in Example 7.
Fig. 11 shows the measured cross-sectional curve of the decorative sheet produced in Comparative Example 7.
Fig. 12 shows the location at which the measured cross-sectional curve was measured in Comparative Example 7.
Fig. 13 shows the measurement results of the volume area 1 of the decorative sheet produced in Comparative Example 7.
Fig. 14 shows the measurement results of the volume area 2 of the decorative sheet produced in Comparative Example 7.

Description of Embodiments

1. Decorative Sheet

The decorative sheet of the present invention is a decorative sheet having a surface-protecting layer on its outermost surface, (1) the surface-protecting layer having a Martens hardness of 30 to 170 N/mm$^2$, the Martens hardness being a value measured in such a manner that when the surface-protecting layer contains fine particles, a diamond indenter is pressed into a position avoiding the fine particles to measure the Martens hardness of a cross-section, (2) the surface-protecting layer having irregularities, the irregularities having an embossed shape with a pebbly pattern, a wood-grain pattern, a wooden pattern, a marble grain pattern, or a leather pattern, and the irregularities having an average interval Sm of 180 $\mu$m to 950 $\mu$m, (3) the surface-protecting layer having a maximum height Rz of 10 to 45 $\mu$m, and (4) the surface-protecting layer having a ratio of the area of a portion from the surface to a depth of 30 $\mu$m of 40% or more. Due to the above characteristics, the decorative sheet of the present invention has excellent anti-slip properties, anti-slip durability, impact resistance, and stain resistance, and also has excellent designability. Therefore, the decorative sheet for floors of the present invention can be used for floors.

The decorative sheet of the present invention is described in detail below. In the decorative sheet of the present invention, "surface" refers to a front surface. When the decorative sheet of the present invention is laminated on a base material or the like, the front surface is opposite to a surface that is in contact with the base material. The front surface is perceptible to the eye after lamination. In this specification, the surface side of the decorative sheet of the present invention may be referred to as "the front" or "above," and the opposite side may be referred to as "the back" or "below." Below, upper and lower limits of numerical ranges indicated with numerals before and after "to" mean that the lower limit is X or more and the upper limit is Y or less. For example, the phrase "$\alpha$ to $\beta$" means that the numerical range is $\alpha$ or more and $\beta$ or less.

The layer thickness in this specification is a value measured at a location of the decorative sheet where there is no unevenness, such as embossing or protrusion of fine particles.

Layer Structure of Decorative Sheet of Present Invention

The decorative sheet of the present invention may have the surface-protecting layer on its outermost surface, and the specific structure may be suitably set depending on the use etc. of the decorative sheet. Examples include a decorative sheet having any of a picture pattern layer, a transparent adhesive layer, a transparent resin layer, and a primer layer on a base material sheet, and having a surface-protecting layer on the outermost surface.

As a typical example of the decorative sheet of the present invention, a decorative sheet having a picture pattern layer, a transparent adhesive layer, a transparent resin layer, a primer layer, and the surface-protecting layer in sequence on a base material sheet is specifically described below.

Base Material Sheet

A picture pattern layer etc. are laminated in sequence on a surface (front surface) of the base material sheet.

The base material sheet is preferably, for example, a sheet (film) made of a thermoplastic resin. Specific examples include polyethylene, ethylene-$\alpha$ olefin copolymers, polypropylene, polymethylpentene, polybutene, ethylene-propylene copolymers, propylene-butene copolymers, ethylene-vinyl acetate copolymers, saponified products of ethylene-vinyl acetate copolymers, ethylene-(meth)acrylic acid copolymers, ethylene-(meth)acrylic acid ester copolymers, and like olefin-based resins, polyvinyl chloride, polyethylene terephthalate, polybutylene terephthalate, polyamide, polycarbonate, polyethylene naphthalate, ionomers, acrylic acid ester-based polymers, methacrylic acid ester-based polymers, and the like. The base material sheet is formed by using these resins singly or in a combination of two or more.

In this specification, the term "(meth)acrylic acid" refers to acrylic acid and/or methacrylic acid; the same applies to other portions referring to "meth."

The base material sheet may be colored. In this case, colorants (pigments or dyes) may be added to such thermoplastic resins as described above. Examples of usable colorants include inorganic pigments, such as titanium dioxide, carbon black, and iron oxide; organic pigments, such as phthalocyanine blue; and various dyes. Such colorants may be selected from one or more known or commercially available products. The amount of colorants may be appropriately selected according to the desired color etc.

The base material sheet may contain, as needed, various kinds of additives, such as fillers, matting agents, foaming agents, flame retardants, lubricants, antistatic agents, antioxidants, ultraviolet absorbers, and light stabilizers.

The thickness of the base material sheet can be suitably determined depending on the application of the final product, the method of use of the final product, etc. In general, the thickness is preferably 20 to 300 $\mu$m.

The surface (front surface) of the base material sheet may be subjected to a corona discharge treatment, as needed, in order to enhance the adhesion of the ink that forms a picture pattern layer. The corona discharge treatment may be performed according to known methods under known conditions. The back surface of the base material sheet may be subjected to a corona discharge treatment, or a back-side primer layer, described later, may be formed, as needed.

Picture Pattern Layer

The decorative sheet of the present invention may have a picture pattern layer.

The picture pattern layer is a layer that imparts a desired picture (design) to the decorative sheet, and the kind etc. of the picture are not limited. Examples include wood-grain patterns, leather patterns, marble grain patterns, pebbly patterns, tiled patterns, brick-masonry patterns, textile patterns, geometric figures, letters, symbols, abstraction patterns, and the like.

The method of forming a picture pattern layer is not particularly limited. For example, the picture pattern layer may be formed on the surface of a base material sheet by a printing method using ink obtained by dissolving (or dispersing) a known colorant (dye or pigment) together with a binding resin in a solvent (or a dispersion medium). As the ink, an aqueous composition can also be used from the viewpoint of reducing the VOC of the decorative sheet.

Examples of colorants include inorganic pigments, such as carbon black, titanium white, zinc oxide, red iron oxide, Berlin blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminum powder and bronze powder; pearlescent pigments, such as titanium oxide-coated mica and bismuth chloride oxide; fluorescent pigments; noctilucent pigments; and the like. Such colorants may be used singly or in a combination of two or more. These colorants may be used in combination with a filler such as silica, an extender pigment such as organic beads, a neutralizer, a surfactant, and the like.

Examples of binding resins include hydrophilized polyester-based urethane resins, and the like, which can be used in combination with polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymers, cellulose-based resins, and the like. Specific examples of usable binding resins include polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenolic resins, and other water-soluble synthetic resins; water-soluble natural polymers such as polynucleotides, polypeptides, and polysaccharides; and the like. Other examples include natural rubber, synthetic rubber, polyvinyl acetate-based resins, (meth)acrylic based-resins, polyvinyl chloride-based resins, modified polyurethane-polyacrylic-based resins, mixtures of natural rubber etc. mentioned above, and other resins. Such binding resins may be used singly or in a combination of two or more.

Examples of solvents (or dispersion media) include petroleum-based organic solvents, such as hexane, heptane, octane, toluene, xylene, ethylbenzene, cyclohexane, and methylcyclohexane; ester-based organic solvents, such as ethyl acetate, butyl acetate, 2-methoxyethyl acetate, and 2-ethoxyethyl acetate; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; inorganic solvents, such as water; and the like. These solvents (or dispersion media) may be used singly or in a combination of two or more.

Examples of printing methods for forming the picture pattern layer include gravure printing, offset printing, screen printing, flexo printing, electrostatic printing, ink jet printing, and the like. When a solid-like picture pattern layer is formed over the entire surface, various coating methods, such as roll coating, knife coating, air knife coating, die coating, lip coating, comma coating, kiss coating, flow coating, and dip coating, can be used. In addition to the above, examples of usable methods include hand-drawing methods, marbling methods, photographic methods, transfer methods, laser beam drawing methods, electron beam drawing methods, metal partial deposition methods, etching methods, and the like. Such methods may be used in combination with other methods.

The thickness of the picture pattern layer is not particularly limited, and can be appropriately selected according to the characteristics of the product. The layer thickness is about 0.1 to 10 $\mu$m.

Color-Concealing Layer

In the decorative sheet of the present invention, a color-concealing layer may be further formed between the base material sheet and the picture pattern layer.

The color-concealing layer may conceal the ground color of an adherend when the decorative sheet and the adherend are bonded together, and may be generally formed so as to cover the base material sheet.

The known printing methods mentioned above can be used for the formation of the color-concealing layer.

Further, the ink used in the formation of the picture pattern layer can be used as it is.

The coating amount is desirably in the range of 2 to 30 g/m². The thickness of the color-concealing layer is generally about 0.1 to 20 μm, and preferably about 1 to 10 μm.

Adhesive Layer

In order to increase the adhesion between a transparent resin layer, described later, and the picture pattern layer, an adhesive layer may be formed on the picture pattern layer. The adhesive layer is preferably a transparent adhesive layer, and the transparent adhesive layer may be colorless transparent, colored transparent, translucent, or the like.

The adhesive is not particularly limited, and adhesives known in the field of decorative sheets can be used.

Examples of adhesives known in the field of decorative sheets include thermoplastic resins, such as polyamide resin, acrylic resin, and vinyl acetate resin; thermosetting resins, such as urethane-based resin; and the like. These adhesives are used singly or in a combination of two or more. Further, two-component curable polyurethane resins or polyester resins using isocyanate as a curing agent can also be applied.

The known printing methods mentioned above can be used for the formation of the transparent adhesive layer.

The thickness of the transparent adhesive layer is not particularly limited; however, the thickness after drying is about 0.1 to 30 μm, and preferably about 1 to 20 μm.

Transparent Resin Layer

The decorative sheet for floors of the present invention may have a transparent resin layer.

The transparent resin layer is not particularly limited as long as it is transparent, and may be colorless transparent, colored transparent, translucent, or the like. Examples of resins that constitute the transparent resin layer include polyethylene, ethylene-α olefin copolymers, homopolypropylene, random polypropylene, and like polypropylenes, polymethylpentene, polybutene, ethylene-propylene copolymers, propylene-butene copolymers, ethylene-vinyl acetate copolymers, saponified products of ethylene-vinyl acetate copolymers, ethylene-(meth)acrylic acid copolymers, ethylene-(meth)acrylic acid ester copolymers, olefin-based elastomers, and like olefin-based resins, polyethylene terephthalate, polybutylene terephthalate, polyamide, ionomers, acrylic acid ester-based polymers, methacrylic acid ester-based polymers, polycarbonate, cellulose triacetate, and the like. These resins may be used singly or in a combination of two or more.

The transparent resin layer is preferably a transparent thermoplastic resin layer, and more preferably contains an olefin-based resin typified by polypropylene resin or polyethylene resin, and even more preferably the resin constituting the transparent resin layer is such an olefin-based resin or an ionomer-based resin.

The transparent resin layer may be colored as long as the layer is transparent; however, it is particularly preferable not to mix a colorant.

The thickness of the transparent resin layer is generally about 20 to 200 μm, but may exceed this range according to the application etc. of the decorative sheet for floors.

Primer Layer

A primer layer may be provided on the transparent resin layer. The primer layer can be formed by applying a known primer agent to the surface of the transparent resin layer. Examples of primer agents include urethane resin-based primer agents comprising an acrylic-modified urethane resin (acrylic urethane-based resin), etc.; primer agents comprising a urethane-cellulose-based resin (e.g., a resin obtained by adding hexamethylene diisocyanate to a mixture of urethane and nitrocellulose); resin-based primer agents comprising a block copolymer of acrylic and urethane; and the like. The primer agent may contain additives, as needed. Examples of additives include fillers, such as calcium carbonate, and clay; flame retardants, such as magnesium hydroxide; antioxidants; lubricants; foaming agents; ultraviolet absorbers; light stabilizers; and the like. The amount of additives to be mixed can be appropriately selected according to the characteristics of the product.

The coating amount of the primer agent is not particularly limited, but is generally about 0.1 to 100 g/m², and preferably about 0.1 to 50 g/m².

The thickness of the primer layer is not particularly limited, but is generally about 0.01 to 10 μm, and preferably about 0.1 to 1 μm.

Surface-Protecting Layer

The decorative sheet of the present invention has, on its outermost surface, a surface-protecting layer having a Martens hardness (hardness) of 30 to 170 N/mm$^2$. The Martens hardness of the surface-protecting layer is preferably 70 to 150 N/mm$^2$.

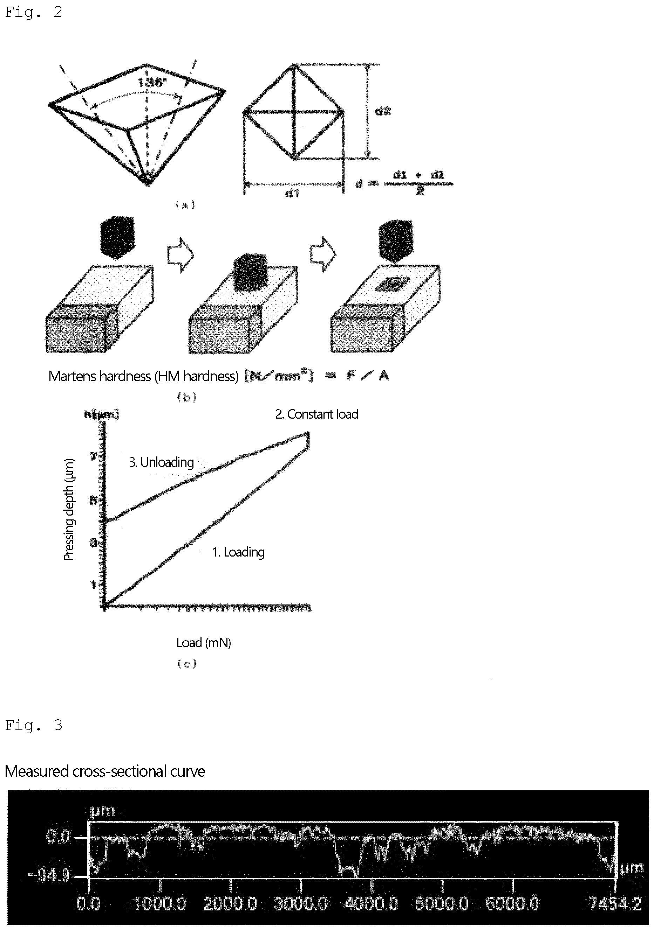

In this specification, the Martens hardness was measured using a Martens hardness measuring system (PICODENTOR HM-500, produced by Fischer Instruments K.K.) according to ISO 14577. The pressing conditions are as follows. As shown in Fig. 2(c), first, a load of 0 to 5 mN is applied for 10 seconds at room temperature (ambient laboratory temperature). Next, a load of 5 mN is maintained for 5 seconds. Finally, unloading is performed from 5 to 0 mN for 10 seconds. In this specification, in order to avoid the influence of the hardness of layers other than the surface-protecting layer, the Martens hardness of the cross-section of the surface-protecting layer was measured. For this measurement, the decorative sheet was embedded in a resin (e.g., a cold-curing epoxy two-component curable resin or UV-curable resin) and allowed to stand at room temperature for at least 24 hours for curing. The cured embedded sample was then cut, mechanically polished to expose the cross-section of the surface-protecting layer, and the diamond indenter was pressed into the cross-section (when the layer contained fine particles of a filler etc., in a position avoiding the fine particles) to thereby measure the Martens hardness of the cross-section.

The Martens hardness of the surface-protecting layer can be suitably set by, for example, 1) mixing a plurality of resin components, or 2) adding an elastomer to a resin. For example, when a urethane acrylate, described later, is used as a resin component that constitutes the surface-protecting layer, a desired Martens hardness can be obtained by suitably mixing a bifunctional urethane acrylate and a hexafunctional urethane acrylate, or by using only a trifunctional urethane acrylate having a molecular weight of about 1500. The "bifunctional urethane acrylate" as mentioned herein refers to a urethane acrylate having two radically polymerizable acryloyl groups in one molecule. Similarly, the "trifunctional urethane acrylate" and "hexafunctional urethane acrylate" refer to urethane acrylates having three or six radically polymerizable acryloyl groups in one molecule, respectively.

Further, the decorative sheet of the present invention has specific unevenness on its surface. In the decorative sheet of the present invention, irregularities that form the above unevenness have an embossed shape with a pebbly pattern, a wood-grain pattern, a wooden pattern, a marble grain pattern, or a leather pattern. Because the irregularities have such an embossed shape, the decorative sheet of the present invention can have excellent anti-slip properties, anti-slip durability, impact resistance, and stain resistance, and can also have excellent designability.

The average interval (Sm) of the irregularities is 180 μm to 950 um. If Sm is less than 180 pm, the designability is inferior, and if Sm exceeds 950 pm, the anti-slip properties are inferior. Sm is preferably 450 to 750 μm.

Sm is an index showing the intervals of the irregularities in the surface-protecting layer. The reference length L is extracted from the roughness curve of the surface-protecting layer in the direction of its average line, the sum of the lengths of average lines corresponding to one peak and one adjacent valley is determined, and the average value of the sum is expressed as the average interval Sm. A small Sm means a fine grained surface (i.e., dense irregularities).

The maximum height (Rz) of the surface-protecting layer is 10 to 45 um. If Rz is less than 10 pm, the designability is inferior, and if Rz exceeds 45 μm, the stain resistance is inferior. Rz is preferably 10 to 30 μm, and more preferably 10 to 19 μm.

Rz is an index showing the maximum height of the surface-protecting layer. The reference length L is extracted from the roughness curve of the surface-protecting layer in the direction of its average line, and the sum of the height Ha from the average line of the extracted part to the highest peak and the depth Hb to the lowest valley bottom is expressed as the maximum height Rz (Rz = Ha + Hb).

Sm is according to JIS B0601 (1994), and Rz is according to the surface roughness standard of JIS B0601 (2001).

Sm and Rz both can be determined by measuring the surface roughness of the surface-protecting layer. The surface roughness can be measured with a surface roughness measuring instrument, such as Surfcom 120A (produced by Tokyo Seimitsu Co., Ltd.).

In the decorative sheet of the present invention, the surface-protecting layer has a ratio of the area of a portion from the surface to a depth of 30 um of 40% or more. If this ratio is less than 40%, the decorative sheet has inferior anti-slip properties. The ratio is preferably 50 to 90%, and more preferably 60 to 85%. When the upper limit of the ratio is within the above range, the designability of the decorative sheet is further improved. The area of a portion from the surface to a depth of 30 μm is the area of a portion that comes into contact with the foot when walking by stepping on the surface of the decorative sheet, and is also referred to as the "contact area." The above ratio is measured by the following measurement method.

Ratio of Area (Contact Area) of Portion from Surface to Depth of 30 um

The ratio of the area (contact area) of a portion from the surface to a depth of 30 μm of the decorative sheet is measured using a laser microscope (VK-X1000, produced by Keyence Corporation). Specifically, the entire volume area 1 is measured from the surface of the decorative sheet in an area of 1 cm$^2$ at a lens magnification of 50x. Then, the volume area 2 from the surface to a depth of 30 um is measured, and the ratio of the contact area is calculated based on the following formula:

$$\text{(Ratio of contact area (\%))} = \text{(volume area 2/volume area 1)} \times 100$$

The volume area 1 is the area of the smooth portion of the surface of the decorative sheet, and the area of all faces forming the surfaces of the decorative sheet, such as the wall surfaces and bottom surfaces of the irregularities. The volume area 2 is the area obtained by measuring the area of a face from the surface to a depth of 30 μm using the laser microscope VK-X1000, and is the contact area described above.

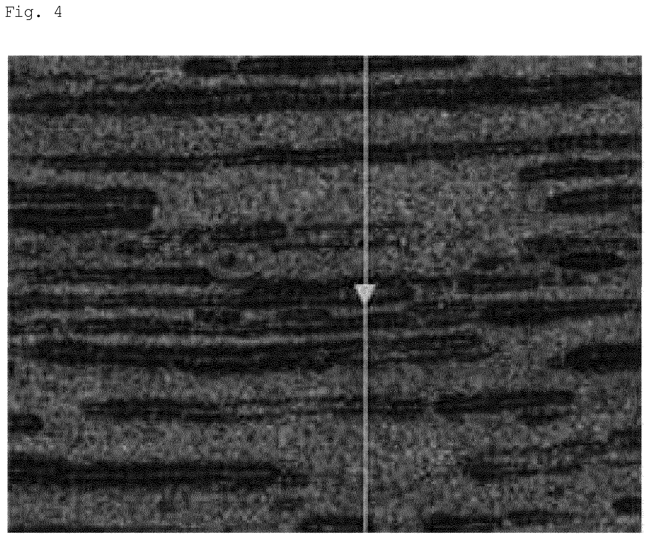

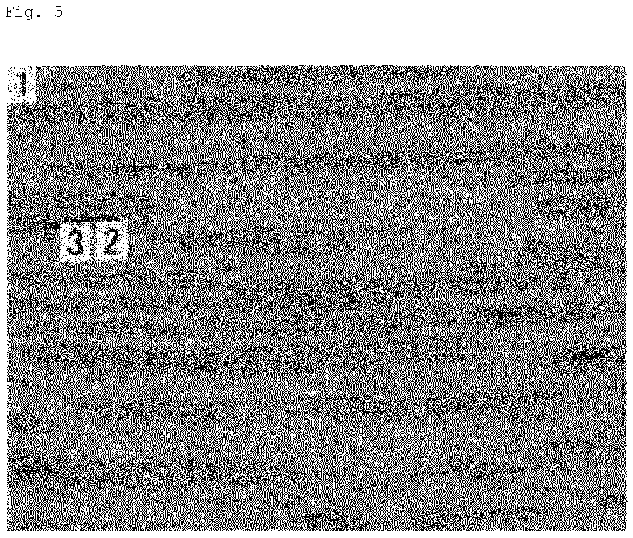

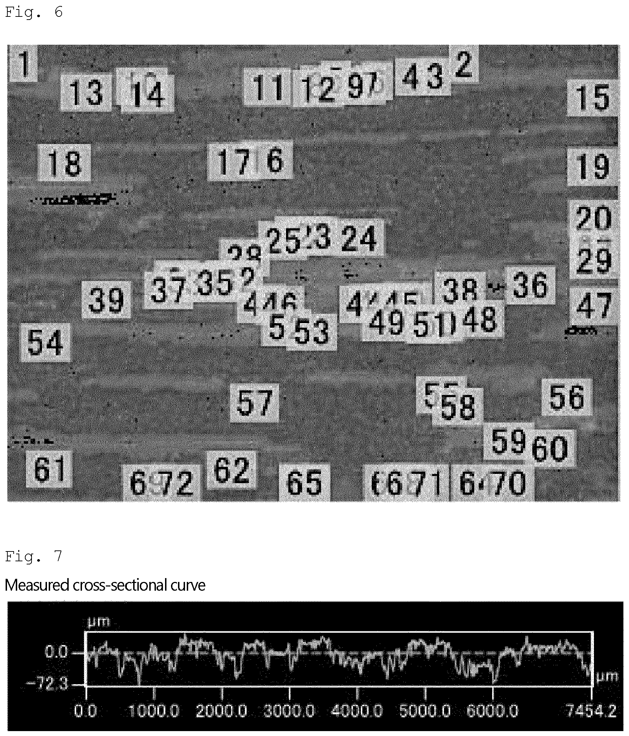

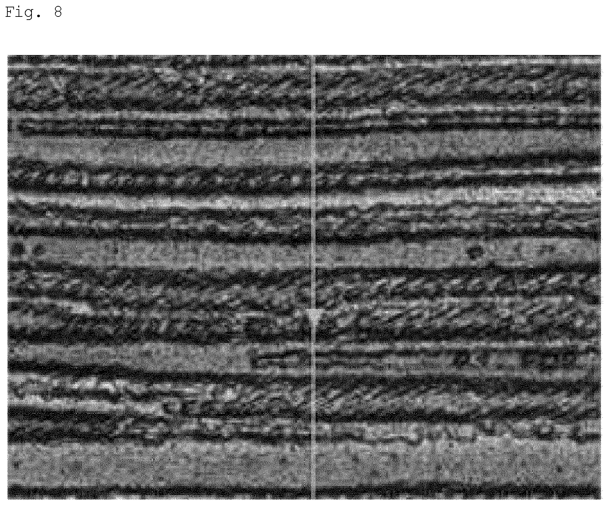

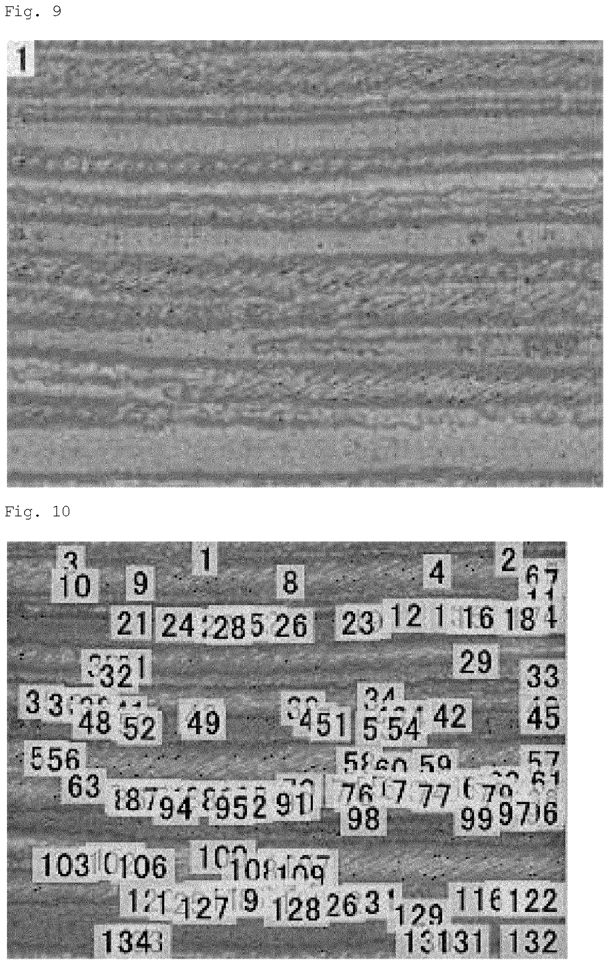

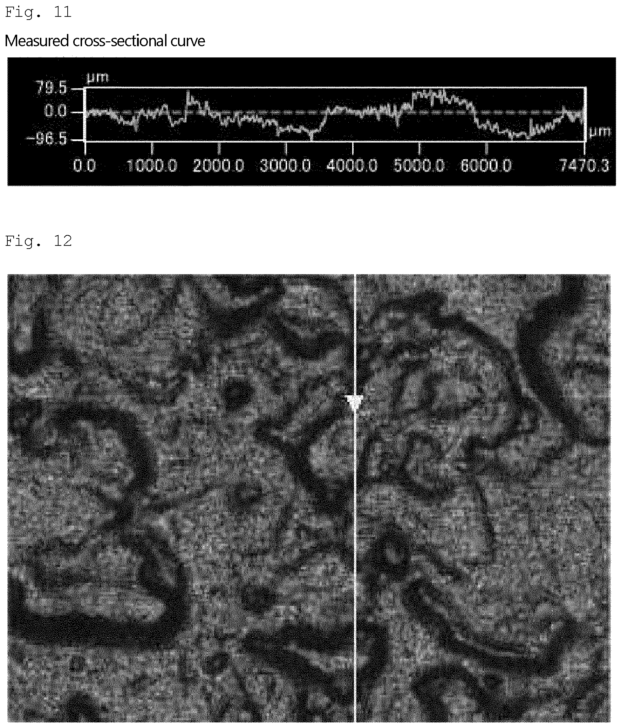

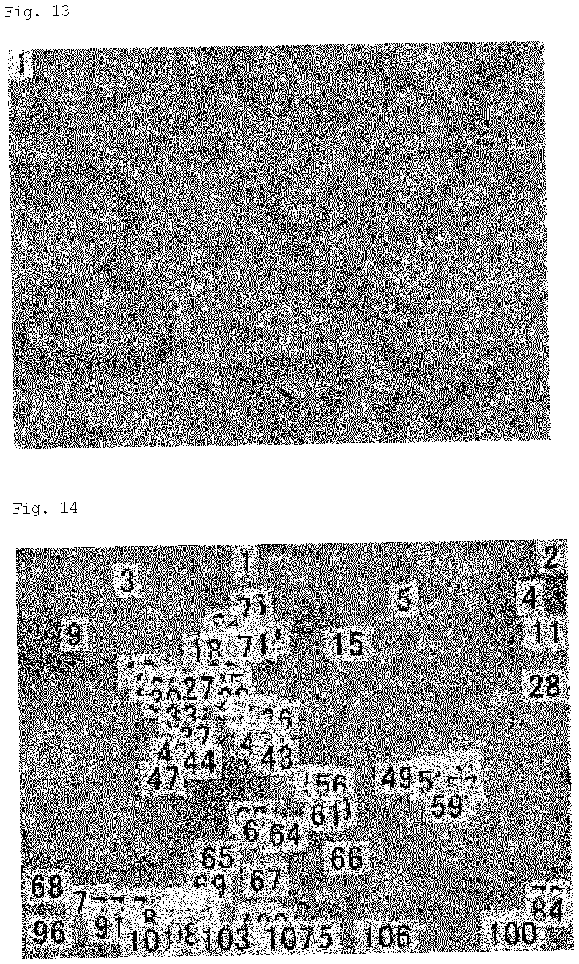

Figs. 3 to 14 show examples in which the ratio of the area of a portion from the surface to a depth of 30 μm of the surface-protecting layer was measured in Example 4, Example 7, and Comparative Example 7 described later. Specifically, Fig. 3 is the measured cross-sectional curve of Example 4, and Fig. 4 shows the location at which the measured cross-sectional curve was measured in Example 4. Fig. 5 shows the measurement results of the volume area 1 in Example 4, and Fig. 6 shows the measurement results of the volume area 2 in Example 4. Fig. 7 is the measured cross-sectional curve of Example 7, and Fig. 8 shows the location at which the measured cross-sectional curve was measured in Example 7. Fig. 9 shows the measurement results of the volume area 1 in Example 7, and Fig. 10 shows the measurement results of the volume area 2 in Example 7. Fig. 11 is the measured cross-sectional curve of Comparative Example 7, and Fig. 12 shows the location at which the measured cross-sectional curve was measured in Comparative Example 7. Fig. 13 shows the measurement results of the volume area 1 in Comparative Example 7, and Fig. 14 shows the measurement results of the volume area 2 in Comparative Example 7. The ratio of the contact area is 54% in Example 4, 41% in Example 7, and 10% in Comparative Example 7. In Fig. 6 (Example 4), Fig. 10 (Example 7), and Fig. 14 (Comparative Example 7), the dark portions indicate faces from the surface to a depth of 30 μm. It is understood that in Fig. 14, the dark portion is less than that in Figs. 6 and 10, and that in Comparative Example 7, the ratio of the area of the portion from the surface to a depth of 30 μm was low.

Sm and Rz of the surface-protecting layer, and the ratio of the area (contact area) of a portion from the surface to a depth of 30 μm can be suitably set by performing embossing using an embossing plate with irregularities, the embossing plate 1) containing fine particles described later and 2) having desired Sm and Rz, and a desired ratio of the area (contact area) of a portion from the surface to a depth of 30 μm.

The embossing method is not particularly limited. For example, the following method is preferable: after the front surface of the surface-protecting layer is softened by heating, and pressed and shaped by using an embossing plate, cooling is performed. Depending on the material of the decorative sheet, which is a final product, or the surface-protecting layer, for example, after the front surface of the transparent resin layer is softened by heating, and pressed and shaped by using an embossing plate, a surface-protecting layer may be formed on the resin layer.

The embossing is conducted using a known sheet-fed or rotary embossing machine.

When the surface-protecting layer has a picture pattern layer as a lower layer, this layer is preferably transparent.

The resin that constitutes the surface-protecting layer is preferably a curable resin, such as a thermosetting resin or an ionizing radiation-curable resin (e.g., electron beam-curable resin). In particular, in terms of scratch resistance due to high surface hardness, convex shape retention, productivity, and the like, the surface-protecting layer preferably contains an ionizing radiation-curable resin, and more preferably the resin that constitutes the surface-protecting layer is an ionizing radiation-curable resin.

Examples of thermosetting resins include unsaturated polyester resins, polyurethane resins (including two-component curable polyurethane), epoxy resins, amino alkyd resins, phenol resins, urea resins, diallyl phthalate resins, melamine resins, guanamine resins, melamine-urea copolycondensation resins, silicone resins, polysiloxane resins, and the like.

These resins may contain crosslinking agents, curing agents (e.g., polymerization initiators), polymerization accelerators, etc. Examples of curing agents include isocyanate, organic sulfonic acid salts, etc., which can be added to unsaturated polyester resins, polyurethane resins, etc.; organic amines, etc., which can be added to epoxy resins; peroxides, such as methyl ethyl ketone peroxide; and radical initiators, such as azoisobutylnitrile, which can be added to unsaturated polyester resins.

As the method for forming the surface-protecting layer using a thermosetting resin, for example, a solution of a thermosetting resin is applied by a coating method, such as roll coating or gravure coating, followed by drying and curing.

The ionizing radiation-curable resin is not limited as long as it can undergo a crosslinking polymerization reaction upon irradiation with ionizing radiation and is formed into a three-dimensional polymer structure. For example, one or more types of prepolymers, oligomers, and monomers that have, in the molecule, a polymerizable unsaturated bond crosslinkable by irradiation with ionizing radiation, or an epoxy group can be used. Specific examples include acrylate resins, such as urethane acrylate, polyester acrylate, and epoxy acrylate; silicone resins, such as siloxane; polyester resins; epoxy resins; and the like.

Examples of ionizing radiation include visible rays, ultraviolet rays (near ultraviolet rays, vacuum ultraviolet rays, etc.), X rays, electron beams, ionic lines, etc. Of these, ultraviolet rays and/or electron beams are desirable.

Examples of the source of ultraviolet rays include ultra-high-pressure mercury lamps, high-pressure mercury

**EP 4 316 810 A1**

lamps, low-pressure mercury lamps, carbon arc lamps, black-light fluorescent lamps, metal halide lamps, and like light sources. The wavelength of ultraviolet rays is about 190 to 380 nm.

Examples of the source of electron beams include various electron beam accelerators, such as Cockcroft-Walton, Van de Graaff, resonance transformer, insulated core transformer, linear, Dynamitron, and high-frequency accelerators. The energy of the electron beam is preferably about 100 to 1000 keV, and more preferably about 100 to 300 keV. The exposure dose of the electron beam is preferably about 2 to 15 Mrad.

Although the ionizing radiation-curable resin is sufficiently cured by irradiation with an electron beam, it is preferable to add a photopolymerization initiator (sensitizer) when the resin is cured by irradiation with ultraviolet rays.

The photopolymerization initiator used in the case of a resin having a radically polymerizable unsaturated group is, for example, at least one of the following: acetophenones, benzophenones, thioxanthones, benzoin, benzoin methyl ether, Michler's benzoyl benzoate, Michler's ketone, diphenyl sulfide, dibenzyl disulfide, diethyl oxide, triphenyl biimidazole, isopropyl-N,N-dimethylaminobenzoate, and the like. The photopolymerization initiator used in the case of a resin having a cation polymerizable functional group is, for example, at least one of the following: aromatic diazonium salts, aromatic sulfonium salts, metallocene compounds, benzoin sulfonate, furyloxy sulfoxonium diallyliodosyl salts, and the like.

The amount of the photopolymerization initiator added is not particularly limited. The amount is generally about 0.1 to 10 parts by mass, per 100 parts by mass of the ionizing radiation-curable resin.

The thickness of the surface-protecting layer may be within a range that does not impair the effects of the present invention, and is not particularly limited. The thickness of the surface-protecting layer is preferably 1 to 200 μm, more preferably 1 to 100 μm, even more preferably 5 to 50 μm, and particularly preferably 10 to 40 μm.

The surface-protecting layer may contain fine particles. Examples of fine particles include inorganic fillers, such as silica, aluminum oxide, silicon carbide, silicon dioxide, calcium titanate, barium titanate, magnesium pyroborate, zinc oxide, silicon nitride, zirconium oxide, chromium oxide, iron oxide, boron nitride, diamond, emery, and glass fiber; organic material powders or beads, such as acrylic, crosslinked alkyl, crosslinked styrene, benzoguanamine resin, urea-formaldehyde resin, phenol resin, polyethylene, and nylon; and the like. The fine particles may be used singly or in a combination of two or more.

The average particle size of the fine particles is preferably equal to or larger than the thickness of the surface-protecting layer. For exhibiting scratch resistance, the average particle size of the fine particles is preferably less than "the thickness of the surface-protecting layer + 40 μm," and more preferably equal to or less than "the thickness of the surface-protecting layer + 30 μm."

The average particle size of the fine particles can be measured by a known method, such as a laser diffraction method, a Coulter counter method, or a sedimentation method. The average particle size refers to the mode diameter.

The content of the fine particles in the surface-protecting layer is preferably 3 to 50 parts by mass, and more preferably 5 to 30 parts by mass, per 100 parts by mass of the resin components forming the surface-protecting layer.

Silicone may be added to the surface-protecting layer. When silicone is added to the surface-protecting layer, the amount of silicone added is preferably 0.1 to 1 part by mass, and more preferably 0.1 to 0.5 parts by mass, per 100 parts by mass of the resins (resin components) constituting the surface-protecting layer, in terms of achieving both the easiness of wiping and the difficulty of slipping.

The surface-protecting layer may contain, as needed, solvents, colorants such as dyes and pigments, fillers such as inorganic fillers, antifoaming agents, leveling agents, thixotropy-imparting agents, flame retardants, antibacterial agents, antiviral agents, anti-allergen agents, and other various additives.

As the inorganic filler, an inorganic filler having a thickness larger than that of the surface-protecting layer can be contained in the surface-protecting layer to impart a predetermined surface texture to the surface-protecting layer. Inorganic fillers can also be used as matting agents; when the surface-protecting layer contains an inorganic filler, the effect of limiting the curing shrinkage of the surface-protecting layer can also be expected. Therefore, in the present invention, the inorganic filler is preferably surface-treated (hydrophobized). Among these additives, particularly at least one member selected from the group consisting of antibacterial agents, antiviral agents, and anti-allergen agents is preferably contained in the surface-protecting layer, which is the outermost layer, in terms of easily obtaining the effect.

Examples of inorganic fillers include silica, aluminum oxide, silicon carbide, silicon dioxide, calcium titanate, barium titanate, magnesium pyroborate, zinc oxide, silicon nitride, zirconium oxide, chromium oxide, iron oxide, boron nitride, diamond, emery, glass fiber, and the like.

The method for surface-treating (hydrophobizing) the inorganic filler is not particularly limited, and a known method can be used. Examples include a method of hydrophobizing the inorganic filler with a silicone oil-based treatment agent; a method of treating the inorganic filler with an alkylsilazane-based treatment agent, a trimethylsilylating agent, and/or alkoxysilane, and then hydrophobizing the inorganic filler with a silicone oil-based treatment agent mentioned above; a method of hydrophobizing the inorganic filler with a silicone oil-based treatment agent, further followed by treatment with a trimethylsilylating agent or an alkylsilazane-based treatment agent; a method of hydrophobizing the inorganic filler with alkoxysilane; a method of treating the inorganic filler with alkoxysilane, further followed by treatment with a silicone oil-based treatment agent or with a silicone oil-based treatment agent and alkoxysilane; a method of treating the inorganic filler with a dimer diol siloxane and/or trimethylsilanol or cyclic siloxane; and the like. In addition to these hydrophobization methods, usable methods include hydrophobization methods using various coupling agents, such as silane coupling agents, titanate-based coupling agents, and aluminate-based coupling agents; phosphoric acid-based surfactants and fatty acid-based surfactants; or fat, stearic acid, etc. Hereinafter, each of the above-mentioned products for hydrophobizing the untreated inorganic filler (e.g., all of the treatment agents such as silicone oil-based treatment agents, silane coupling agents, and surfactants) are collectively referred to as "hydrophobizing agents."

The method for hydrophobizing the inorganic filler with a hydrophobizing agent is not particularly limited, and a known method can be used. Examples include a method of adding (e.g., spraying) a stock solution of the hydrophobizing agent or a diluted solution of the hydrophobizing agent in water or an organic solvent to the untreated inorganic filler (dry treatment method); a method of treating (e.g., immersing) the untreated inorganic filler in a stock solution of the hydrophobizing agent, a hydrophobizing agent-containing aqueous solution, or a hydrophobizing agent-containing organic solvent, followed by drying (wet treatment method); and the like. As a result of such treatment, a part or all of the surface of the inorganic filler is coated with the hydrophobizing agent (a), absorbs the hydrophobizing agent (b), or is coated with and absorbs the hydrophobizing agent (c) (combination of (a) and (b)). As a result, a hydrophobized inorganic filler is obtained. The hydrophobizing agents may be used singly or in a combination of two or more.

Antibacterial agents include inorganic antibacterial agents and organic antibacterial agents. Inorganic antibacterial agents are particularly desirable because they are generally safer, more durable, and more heat-resistant than organic antibacterial agents. Inorganic antibacterial agents are agents in which antibacterial metals, such as silver, copper, and zinc, are supported on various inorganic carriers. When the surface-protecting layer contains such an antibacterial agent, the amount thereof added is preferably 0.1 to 10 parts by mass per 100 parts by mass of the resin components in the surface-protecting layer; however, the details can be suitably adjusted depending on the type of antibacterial agent.

Antiviral agents can be generally roughly divided into organic and inorganic types. Examples of organic antiviral agents include quaternary ammonium salt-based, quaternary phosphonium salt-based, pyridine-based, pyrithione-based, benzimidazole-based, organic iodine-based, isothiazoline-based, anion-based, and ether-based antiviral agents. Examples of inorganic antiviral agents include those in which metal ions of silver, copper, or zinc are supported on carriers, such as zeolite, apatite, zirconia, glass, or molybdenum oxide. When the surface-protecting layer contains such an antiviral agent, the amount thereof added is preferably 0.1 to 10 parts by mass per 100 parts by mass of the resin components in the surface-protecting layer; however, the details can be suitably adjusted depending on the type of antiviral agent.

Among the above organic antiviral agents, benzimidazole-based antiviral agents, anion-based antiviral agents, or ether-based antiviral agents, all of which keep the particle shape, are particularly preferably used. Keeping the particle shape means that they exist in the form of particles without dissolving in the composition (ink before curing) that becomes the curable resin of the surface-protecting layer. Therefore, in the process of forming the surface-protecting layer, the particles of an imidazole-based compound, anion-based compound, or ether-based compound are more likely to emerge, and the particles of the imidazole-based compound, anion-based compound, or ether-based compound can be easily distributed unevenly on the outermost surface side of the surface-protecting layer. Due to the uneven distribution of the particles of the imidazole-based compound, anion-based compound, or ether-based compound on the outermost surface side of the surface-protecting layer, the amount of antiviral agent required to achieve predetermined antiviral properties can be reduced. Thus, it is easier to suppress the decrease in the scratch resistance of the surface-protecting layer.

The anion-based antiviral agent is preferably, for example, one containing a styrene resin, a styrene polymer derivative compound, and an unsaturated carboxylic acid derivative compound. The styrene polymer derivative compound and the unsaturated carboxylic acid derivative compound preferably contain at least one structure of styrene, sodium sulfonate, acrylic acid, maleic acid, and fumaric acid, and more preferably contain all of these structures. This is because there are two major types of viruses in terms of the presence or absence of an envelope, and the structure of the antiviral agent that can effectively inhibit the activity of each type is considered to be different. Therefore, for example, if the effect against only influenza virus, which is a non-enveloped virus, is expected, only a styrene polymer derivative compound may be contained, and particularly a single styrene resin alone may be sufficient to achieve the effect.

The inorganic antiviral agent is preferably a silver-based antiviral agent from the viewpoint of no biotoxicity and excellent safety. In particular, phosphate glass silver-supported compounds or silver zeolite compounds and molybdenum oxide silver double salt compounds are even more preferred because they exhibit antiviral performance even in small amounts, which can reduce the addition amounts.

When the surface-protecting layer contains such a silver-based antiviral agent, discoloration occurs depending on the surface-protecting layer (discoloration may occur in a state of the paint added due to heat/light, or discoloration may occur due to heat/light after the surface-protecting layer is formed); however, this can be improved by adding an ultraviolet inhibitor, a light stabilizer, etc. at appropriate times. For example, for the molybdenum oxide silver double salt compounds, the use of a benzotriazole-based compound is expected to improve discoloration.

The above anti-allergen agent contains either an inorganic compound or an organic compound; each of them may be used singly, or a mixture of two or more different types may be used. The inorganic compound is preferably a metal-supported material. When the surface-protecting layer contains such an anti-allergen agent, the amount thereof added is preferably 0.1 to 10 parts by mass per 100 parts by mass of the resin components in the surface-protecting layer; however, the details can be suitably adjusted depending on the type of anti-allergen agent.

Examples of the method for forming a surface-protecting layer containing an ionizing radiation-curable resin include a method of forming a surface-protecting layer by coating a solution (resin composition for forming the surface-protecting layer) containing (1) a resin, such as an ionizing radiation-curable resin, and (2) optionally other resins, fine particles, an ultraviolet absorber, an antibacterial agent, various additives mentioned above, and the like, by a coating method, such as gravure coating or roll coating, and then curing the ionizing radiation-curable resin.

Back-Side Primer Layer

A back-side primer layer may be provided, as needed, on the back surface (the surface opposite to the surface on which the picture pattern layer is laminated) of the base material sheet. This is effective, for example, when a decorative plate is produced by laminating a decorative sheet and a base material (adherend).

The back-side primer layer can be formed by applying a known primer agent to the base material sheet. Examples of primer agents include urethane resin-based primer agents comprising an acrylic-modified urethane resin (acrylic urethane-based resin), etc.; primer agents comprising a urethane-cellulose-based resin (e.g., a resin obtained by adding hexamethylene diisocyanate to a mixture of urethane and nitrocellulose); resin-based primer agents comprising a block copolymer of acrylic and urethane; and the like. The primer agent may contain additives, as needed. Examples of additives include fillers, such as calcium carbonate, and clay; flame retardants, such as magnesium hydroxide; antioxidants; lubricants; foaming agents; ultraviolet absorbers; light stabilizers; and the like. The amount of additives to be mixed can be appropriately selected according to the characteristics of the product.

The coating amount of the primer agent is not particularly limited, but is generally about 0.1 to 100 $g/m^2$, and preferably about 0.1 to 50 $g/m^2$.

The thickness of the back-side primer layer is not particularly limited, but is generally about 0.01 to 10 um, and preferably about 0.1 to 1 $\mu$m.

Backer Layer

A backer layer (a synthetic resin layer for improving scratch resistance and reducing the effect of a base material (adherend)) may be provided on the back surface of the base material sheet. The scratch resistance particularly refers to resistance to formation of depression when a load is partially applied. Although the decorative sheet of the present invention has sufficient scratch resistance even without a backer layer, the presence of a backer layer can further improve various types of performance, such as scratch resistance.

The backer layer is suitably formed by subjecting a molten resin to extrusion molding. For example, extrusion molding using a T-die is suitable.

Examples of the method for bonding the back surface of the base material sheet and the backer layer include a method for bonding, by heat welding, the base material sheet and a backer layer obtained by subjecting a molten resin to extrusion molding; a method of providing an adhesive layer (and further a primer layer, if required) between the base material sheet and the backer layer to achieve bonding; and the like.

Examples of resins that constitute the backer layer include, but are not limited to, thermoplastic resins, such as polyethylene, polypropylene (PP), polyvinyl alcohol, ethylene-vinyl alcohol copolymers, polymethylene, polymethylpentene, polyethylene terephthalate, amorphous polyethylene terephthalate (A-PET), highly thermal resistant polyalkylene terephthalates (e.g., PET-G, product name (produced by Eastman Chemical Company), which is polyethylene terephthalate in which a part of the ethylene glycol is substituted by 1,4-cyclohexane dimethanol, diethylene glycol, or the like), polybutylene terephthalate (PBT), polycarbonate, polyarylate, polyethylene naphthalate, polyethylene naphthalate-isophthalate copolymers, polyimide, polystyrene, polyamide, ABS (acrylonitrile-butadiene-styrene copolymers), and the like. These resins may be used singly or in a combination of two or more.

The thickness of the backer layer can be suitably determined depending on the application of the final product, the method of use of the final product, etc. In general, the thickness is preferably 100 to 800 $\mu$m. Within this range, the thickness is more preferably 100 to 600 $\mu$m.

The adhesion surface of the backer layer may be subjected to a known adhesion-enhancing treatment, such as corona discharge treatment, plasma treatment, degreasing treatment, or surface-roughening treatment, as required. Moreover, in consideration of the adhesion with an adherend, a primer layer may be further provided on the back surface of the backer layer.

Formation of Various Additives Contained in Layers of Decorative Sheet into Vesicles

The various additives to be added to the layers of the decorative sheet of the present invention described above (e.g., inorganic fillers to be added to the primer layer and the surface-protecting layer) are preferably formed into vesicles. Examples of the method for forming various additives into vesicles are not particularly limited, and known methods may be used to form the vesicles. Among various methods, the supercritical reverse phase evaporation method is preferable.

Examples of the vesicle formation method include the Bangham method, an extrusion method, a hydration method, a reverse phase evaporation method, and a freeze-thaw method, in addition to the supercritical reverse phase evaporation method. These vesicle formation methods are briefly described below. In the Bangham method, chloroform or a chloroform/methanol mixed solvent is placed in a container such as a flask, and a phospholipid is further added and dissolved therein; then, the solvent is removed with an evaporator to form a thin film of the phospholipid; and after a dispersion of additives is added, the mixture is hydrated and dispersed with a vortex mixer to thereby obtain vesicles. In the extrusion method, a phospholipid solution for a thin film is prepared, and the solution is passed through a filter in place of the mixer used as an external agitator in the Bangham method, thereby obtaining vesicles. In the hydration method, which is almost the same preparation method as the Bangham method, the mixture is gently stirred for dispersion, without using a mixer, to obtain vesicles. In the reverse phase evaporation method, a phospholipid is dissolved in diethyl ether or chloroform, a solution containing additives is added thereto to form a W/O emulsion, the organic solvent is removed from the emulsion under reduced pressure, and then water is added to thereby obtain vesicles. In the freeze-thaw method, cooling and heating is used as an external agitation, and cooling and heating is repeated to obtain vesicles.

The supercritical reverse phase evaporation method is specifically explained below. The supercritical reverse phase evaporation method refers to a method of adding an aqueous phase containing various additives as water-soluble or hydrophilic encapsulation materials to a mixture in which a material for forming the outer membrane of the vesicle is evenly dissolved in carbon dioxide in a supercritical state or carbon dioxide at a temperature or pressure condition equal to or greater than the supercritical point, thereby forming a capsule-like vesicle in which the various additives as encapsulation materials are encapsulated with a single membrane. "Carbon dioxide in a supercritical state" refers to carbon dioxide in a supercritical state at a temperature equal to or greater than the critical temperature (30.98°C), and a pressure equal to or greater than the critical pressure (7.3773$\pm$0.0030 MPa); and "carbon dioxide at a temperature or pressure condition equal to or greater than the critical point" refers to carbon dioxide under a condition in which only the critical temperature or only the critical pressure exceeds the critical condition. This method can produce a single-walled lamellar vesicle having a diameter of 50 to 800 nm. "Vesicle" is the general name of a folliculus having a spherically closed membrane structure containing a liquid phase. In particular, those having an outer membrane formed of a biological lipid, such as a phospholipid, are called "liposomes."

Examples of phospholipids include phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soybean lecithin, hydrogenated soybean lecithin, and like glycerophospholipids; and sphingomyelin, ceramide phosphorylethanolamine, ceramide phosphorylglycerol, and like sphingophospholipids.

Other examples of the materials constituting the outer layer include nonionic surfactants; and dispersants, such as a mixture of these surfactants and cholesterols or triacylglycerols.

Examples of nonionic surfactants include one or more members selected from polyglycerolether, dialkylglycerol, polyoxyethylene hardened castor oil, polyoxyethylene alkylether, polyoxyethylene sorbitan fatty acid ester, sorbitan fatty acid ester, polyoxyethylene polyoxypropylene copolymers, polybutadiene-polyoxyethylene copolymers, polybutadiene-poly2-vinylpyridine, polystyrene-polyacrylic acid copolymers, polyethylene oxide-polyethyl ethylene copolymers, polyoxyethylene-polycaprolactam copolymers, and the like.

Examples of the cholesterols include one or more members selected from cholesterol, $\alpha$-cholestanol, $\beta$-cholestanol, cholestane, desmosterol (5,24-cholestadiene-3$\beta$-ol), sodium cholate, cholecalciferol, and the like.

The outer membrane of the liposome may be formed from a mixture of a phospholipid and a dispersant. By forming an outer layer as a liposome formed of a phospholipid, the decorative sheet of the present invention ensures desirable compatibility between the resin composition, which is the main component of each layer, and various additives.

Method for Producing Decorative Sheet

The decorative sheet of the present invention can be obtained by forming at least the surface-protecting layer described above on the outermost surface. For example, the decorative sheet of the present invention can be obtained by laminating a picture pattern layer, a transparent adhesive layer, a transparent resin layer, and a primer layer on a base material sheet, and then forming the surface-protecting layer on the outermost surface.

When the decorative sheet is subjected to embossing, embossing may be performed after the surface-protecting layer is formed or before the surface-protecting layer is formed. For example, as a specific embodiment, 1) after a picture pattern layer, a transparent resin layer, and a primer layer are formed in sequence on a base material sheet, a surface-protecting layer may be formed, and finally embossing may be performed. As another specific embodiment, 2) after a picture pattern layer, a transparent resin layer, and a primer layer are formed in sequence on a base material sheet, embossing may be performed, and finally a surface-protecting layer may be formed. As still another specific embodiment, 3) after a picture pattern layer and a transparent resin layer are formed in sequence on a base material sheet, embossing may be performed, then a primer layer may be provided, and finally a surface-protecting layer may be formed. When Sm and Rz of the surface-protecting layer, and the ratio of the area of a portion from the surface to a depth of 30 $\mu$m are adjusted by embossing, embossing is preferably performed after the surface-protecting layer is formed.

Embossing may be performed by transferring an irregular pattern to the picture printing surface side of the decorative sheet at a sheet temperature of 120°C to 160°C and a pressure of 10 to 40 kg/cm$^2$.

## 2. Decorative Plate

The decorative plate of the present invention has the decorative sheet described above on a base material. The decorative sheet may be laminated on the base material so that the surface-protecting layer of the decorative sheet becomes the outermost surface layer.

The base material (adherend) is not limited, and adherends used for known decorative plates can be used. Examples include wood-based materials, metals, ceramics, plastics, glass, and the like. In particular, wood-based materials can be preferably used for the decorative sheet of the present invention. Specific examples of wood-based materials include sliced veneers, single wood panels, plywood panels, wood fiberboards, particleboards, medium-density fiberboards (MDF), and the like that are formed from various materials, such as Japanese cedar, Japanese cypress, zelkova, pine, lauan, teak, and melapi.

The lamination method is not limited. For example, the decorative sheet can be bonded to the base material using an adhesive. The adhesive may be suitably selected from known adhesives according to, for example, the type of the base material. Examples include polyvinyl acetate, polyvinyl chloride, vinyl chloride-vinyl acetate copolymers, ethylene-acrylic acid copolymers, ionomers, butadiene-acrylonitrile rubber, neoprene rubber, and natural rubber. These adhesives may be used singly or in a combination of two or more.

The thus-produced decorative plate can be used for, for example, interior materials of buildings, such as walls, ceilings, and floors; surface decorative plates for fittings, such as window frames, doors, and railings; and surface decorative plates for furniture or cabinets of light electrical appliances, OA equipment, etc. In particular, the decorative plate of the present invention can be preferably used as a decorative material for floors.

## Examples

The present invention is described in more detail below with reference to Examples and Comparative Examples. However, the present invention is not limited to the Examples.

The following components were prepared as the components for the resin composition constituting the surface-protecting layer.

- Bifunctional urethane acrylate oligomer A (polyol component: polyester diol, Tg: 25°C, molecular weight: 1200)
- Bifunctional urethane acrylate oligomer B (polyol component: polyether diol, Tg: -55°C, molecular weight: 5000)
- Bifunctional urethane acrylate oligomer C (polyol component: polyester diol, Tg: 25°C, molecular weight: 1500)
- Bifunctional urethane acrylate oligomer D (polyol component: polyether diol modified with dicyclohexylmethane diisocyanate (hydrogenated MDI), Tg: -20°C, molecular weight: 5000)
- Trifunctional urethane acrylate oligomer (polyol component: aliphatic urethane acrylate having an isocyanurate skeleton formed by a trimer of hexamethylene diisocyanate, Tg: 100°C or more, molecular weight: 1500)
- Hexafunctional aliphatic urethane acrylate oligomer (Tg: 200°C or more, molecular weight: 1500, UA306H produced by Kyoeisha Chemical Co., Ltd.)
- Filler: (average particle size: 10 $\mu$m, silica)
- Filler: (average particle size: 14 $\mu$m, silica)
- Filler: (average particle size: 20 $\mu$m, silica)

Further, as embossing plates used for embossing, embossing plates having a pebbly pattern, a wooden pattern, a wood-grain pattern, a matte pattern, a leather pattern, or a marble grain pattern were prepared. These embossing plates were different in Rz and Sm, although they were of the same type.

Example 1

Production of Decorative Sheet

After corona discharge treatment was applied to the front and back surfaces of a base material sheet made of a 60 $\mu$m-thick colored polypropylene film, a 4 $\mu$m-thick picture pattern layer with a wood-grain pattern was formed on the base material sheet by gravure printing using a colored ink containing an acrylic resin as a binding resin. Further, a 2 $\mu$m-thick back-side primer layer was formed on a surface of the base material sheet opposite to the picture pattern layer by gravure printing using an acrylic urethane resin and a resin obtained by adding 5 parts by mass of hexamethylene diisocyanate to 100 parts by mass of nitrocellulose resin. A coating liquid made of a two-component curable urethane resin was applied to the picture pattern layer to form a transparent adhesive layer with a thickness of 2 $\mu$m. Further, a polypropylene-based resin sheet was laminated on the adhesive layer by an extrusion lamination method to form a transparent resin layer with a thickness of 80 um. After corona discharge treatment was applied to the surface of the transparent resin layer, a two-component curable urethane resin was applied to the transparent resin layer to form a primer layer with a thickness of 1 um. Then, a resin composition constituting a surface-protecting layer shown below was applied to the primer layer by roll coating to form a coating film (13 $\mu$m), followed by irradiation with an electron beam under the conditions of 175 keV and 5 Mrad (50 kGy) in an environment of an oxygen concentration of 200 ppm or less, thereby forming a surface-protecting layer. Further, the surface-protecting layer side was heated with an infrared non-contact type heater to soften the base material sheet and the transparent resin layer, followed by embossing by heat pressure, thereby forming an irregular pebbly pattern. As a result, a decorative sheet for floors was produced. The Martens hardness of the surface-protecting layer measured in the produced decorative sheet for floors was 35 N/mm$^2$.

Resin Compositions Constituting Surface-Protecting Layer

- Bifunctional urethane acrylate oligomer C: 100 parts by mass
- Fine particles (mode diameter: 20 um, spherical silica): 18 parts by mass

Production of Decorative Plate

An aqueous emulsion adhesive (mass ratio of BA-10L (main agent) to BA-11B (curing agent) = 100:2.5, produced by Japan Coating Resin Co., Ltd.) was uniformly applied at 80 g/m$^2$ to a medium-density wood fiberboard (MDF) having a thickness of 2.5 mm, bonded to the back-side primer layer side of the decorative sheet for floors obtained above, and aged at room temperature for 3 days, thereby producing a decorative plate for floors.

Examples 2 to 7 and Comparative Examples 1 to 7

The decorative sheets and decorative plates shown in Tables 1 and 2 were produced in the same manner as in Example 1, except that the component of the resin composition constituting the surface-protecting layer and the content thereof, the Martens hardness, the type of embossed shape, and the like were changed as appropriate.
The decorative sheets or decorative plates produced in the Examples and Comparative Examples were measured as described below.

Measurement of Martens Hardness

The Martens hardness of the surface-protecting layer in the cross-sectional direction was measured by the method described above. The results are shown in Tables 1 and 2. The Martens hardness values in the tables each indicate the average of ten measurements.

Measurement of Rz and Sm

Sm was measured by the method according to JIS B0601 (1994), and Rz was measured by the method according to JIS B0601 (2001). Rz and Sm were determined by measuring the surface roughness of the decorative plate. The surface roughness was measured using a surface roughness measuring instrument (Surfcom 120A, produced by Tokyo Seimitsu Co., Ltd.). Rz and Sm in the tables each indicate the average of values measured three times at different positions of the decorative plate.

Ratio of Area (Contact Area) of Portion from Surface to Depth of 30 μm

The ratio of the area (contact area) of a portion from the surface to a depth of 30 um of each decorative sheet was measured using a laser microscope (VK-X1000, produced by Keyence Corporation). Specifically, the entire volume area 1 was measured from the surface of the decorative sheet in an area of 1 cm$^2$ at a lens magnification of 50x. Then, the volume area 2 from the surface to a depth of 30 um was measured, and the ratio of the contact area was calculated based on the following formula:

```
(Ratio of contact area (%)) = (volume area 2/volume area 1) × 100
```

Figs. 3 to 14 show examples in which the ratio of the area of a portion from the surface to a depth of 30 μm of the surface-protecting layer was measured in Example 4, Example 7, and Comparative Example 7 described later. Specifically, Fig. 3 is the measured cross-sectional curve of Example 4, and Fig. 4 shows the location at which the measured cross-sectional curve was measured in Example 4. Fig. 5 shows the measurement results of the volume area 1 in Example 4, and Fig. 6 shows the measurement results of the volume area 2 in Example 4. Fig. 7 is the measured cross-sectional curve of Example 7, and Fig. 8 shows the location at which the measured cross-sectional curve was measured in Example 7. Fig. 9 shows the measurement results of the volume area 1 in Example 7, and Fig. 10 shows the measurement results of the volume area 2 in Example 7. Fig. 11 is the measured cross-sectional curve of Comparative Example 7, and Fig. 12 shows the location at which the measured cross-sectional curve was measured in Comparative Example 7. Fig. 13 shows the measurement results of the volume area 1 in Comparative Example 7, and Fig. 14 shows the measurement results of the volume area 2 in Comparative Example 7. The ratio of the contact area is 54% in Example 4, 41% in Example 7, and 10% in Comparative Example 7. In Fig. 6 (Example 4), Fig. 10 (Example 7), and Fig. 14 (Comparative Example 7), the dark portions indicate faces from the surface to a depth of 30 um. It is understood that in Fig. 14, the dark portion is less than that in Figs. 6 and 10, and that in Comparative Example 7, the ratio of the area of the portion from the surface to a depth of 30 μm was low.
The decorative sheets or decorative plates produced in the Examples and Comparative Examples were evaluated as described below.

Impact Resistance (DuPont Impact Test)

The impact resistance was tested according to JIS K5600-5-3: 1999 (General test method for paints, Part 5: Mechanical properties of coating films, Section 3: Falling weight test). Specifically, a weight of 500 g was dropped from a height of 30 cm onto the surface of each of the decorative plates for floors obtained in the Examples and Comparative Examples. The amount of depression was measured for evaluation. Using 9 samples per test, evaluation was made based on how many samples out of the 9 samples were cracked. The evaluation criteria are as follows. A score of +/- or higher is evaluated as having no problems in practical use.

++: No samples were cracked.
+: One or two samples were cracked.
+/-: Three to eight samples were cracked.
-: All the samples were cracked.

Stain Resistance

10% of carbon black for pigments (CAS1333-86-4) was added to White Vaseline (CAS8009-03-8), and the resulting mixture was applied at about 10 g/m$^2$ to the entire surface of each of the decorative sheets for floors produced in the Examples and Comparative Examples. Then, each decorative sheet for floors was dry-wiped with a cleaning cloth (towel cloth) so as to eliminate Vaseline stain residues, and the surface of the sheet after wiping was evaluated by visual observation. The evaluation criteria are as follows. A score of +/- or higher is evaluated as having no problems in practical use.

++: There was no stain residue.
+: Stain was not noticeable.
+/-: There was slight stain.
-: There are stain residues.

Anti-Slip Properties (O-Y·PSM)

The coefficient of slip resistance (C.S.R value) of each decorative plate was measured with socks using a Tokyo Institute of Technology sliding tester (O-Y·PSM). The evaluation criteria are as follows. A smaller numerical value indicates easier to slip, and the range of the coefficient of slip resistance in which people feel comfortable is 0.30 or more and 0.50 or less.

+: a measured value of 0.35 or more and 0.50 less (hard to slip)
+/-: a measured value of 0.30 or more and less than 0.35 (slightly hard to slip)
-: a measured value of 0.25 or more and less than 0.30 (easy to slip)

Anti-Slip Durability

As the treatment for promoting the elimination of unevenness, sliding treatment was performed using a steel wool (Nippon Steel Wool Co., Ltd., material: iron, product number: #1, quality: intermediate) under a load of 300 $g/m^2$ until the sheet surface slightly changed in gloss. Then, an evaluation similar to the evaluation of anti-slip properties described above was performed.

Designability

The decorative sheet was visually observed from the surface-protecting layer side to evaluate the designability according to the following evaluation criteria. A score of +/- or higher is evaluated as having no problems in practical use.

++: The surface irregularities due to embossing matched the design of the lower pattern, and the design gave a sense of irregularities beyond the real one.
+: The surface irregularities due to embossing matched the design of the lower pattern, and the design gave a realistic feeling.
+/-: Although the surface irregularities due to embossing matched the design of the lower pattern, the design had small irregularities and was less likely to give a realistic feeling.
-: The surface irregularities due to embossing were different from the design of the lower pattern, and the design gave an uncomfortable feeling.

The results are shown in Tables 1 and 2.

Table 1

| | | Example 1 | Example 2 | Example 3 | Example 4 | Example 5 | Example 6 | Example 7 |
|---|---|---|---|---|---|---|---|---|
| | Thickness (μm) | 13 | 13 | 13 | 13 | 13 | 13 | 13 |
| Resin (parts by mass) | Bifunctional A | - | 58 | 52 | 52 | 52 | - | - |
| | Bifunctional B | - | 2 | 18 | 18 | 18 | - | - |
| | Bifunctional C | 100 | - | - | - | - | - | - |
| | Bifunctional D | - | - | - | - | - | 70 | 70 |
| | Trifunctional | - | - | - | - | - | 30 | 30 |
| | Hexafunctional | - | 40 | 30 | 30 | 30 | - | - |
| Fine particles | Type | Silica | Silica | Silica | Silica | Silica | Silica | Silica |
| | Mode diameter (μm) | 20 | 20 | 10 | 10 | 20 | 10 | 10 |
| | Addition amount (parts by mass) | 18 | 18 | 10 | 10 | 10 | 10 | 10 |
| | Martens hardness (N/mm²) | 35 | 160 | 70 | 70 | 70 | 150 | 150 |
| Surface-protecting layer / Characteristics | Embossed shape | Pebbly pattern | Wooden pattern | Wood-grain pattern | Wood-grain pattern | Pebbly pattern | Wood-grain pattern | Wood-grain pattern |
| | Rz (μm) | 12 | 16 | 11 | 44 | 30 | 13 | 26 |
| | Sm (μm) | 471 | 591 | 368 | 935 | 230 | 747 | 713 |
| | Ratio of area of portion higher than 30 μm (%) | 82 | 76 | 98 | 54 | 82 | 85 | 41 |
| Evaluation | Impact resistance | + | +/- | + | + | + | + | + |
| | Stain resistance | + | ++ | ++ | + | + | + | + |
| | Anti-slip properties | + | + | + | +/- | + | + | + |
| | Anti-slip durability | +/- | + | + | + | + | + | + |
| | Designability | + | + | +/- | + | +/- | + | + |

Table 2

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Surface-protecting layer | Thickness (μm) | 13 | 13 | 13 | 13 | 13 | 13 | 13 |
| | Resin (parts by mass) — Bifunctional A | 48 | 48 | - | - | 52 | - | - |
| | Bifunctional B | 32 | 2 | - | - | 18 | - | - |
| | Bifunctional C | - | - | - | 80 | - | 80 | 80 |
| | Bifunctional D | - | - | 70 | - | - | - | - |
| | Trifunctional | - | - | 30 | - | - | - | - |
| | Hexafunctional | 20 | 50 | - | 20 | 30 | 20 | 20 |
| | Fine particles — Type | Silica | Silica | Silica | Silica | Silica | Silica | Silica |
| | Mode diameter (μm) | 20 | 10 | 10 | 14 | 20 | 14 | 14 |
| | Addition amount (parts by mass) | 18 | 10 | 10 | 12 | 2 | 12 | 12 |
| | Characteristics — Martens hardness (N/mm$^2$) | 20 | 180 | 150 | 150 | 70 | 150 | 150 |
| | Embossed shape | Pebbly pattern | Matte pattern | Matte pattern | Pebbly pattern | Matte pattern | Leather pattern | Marble grain pattern |
| | Rz (μm) | 12 | 38 | 9 | 55 | 24 | 50 | 31 |
| | Sm (μm) | 471 | 608 | 328 | 800 | 160 | 960 | 1038 |
| | Ratio of area of portion higher than 30 μm (%) | 82 | 58 | 100 | 62 | 100 | 23 | 10 |
| Evaluation | Impact resistance | + | - | + | + | + | + | + |
| | Stain resistance | + | + | + | - | + | + | + |
| | Anti-slip properties | + | + | + | + | + | - | - |
| | Anti-slip durability | - | + | + | + | + | - | - |
| | Designability | + | + | - | ++ | - | ++ | ++ |

Example 8

A decorative sheet was produced in the same manner as in Example 1, except that 3 parts by mass of a phosphate glass silver-supported compound (PG-711, produced by Koa Glass Co., Ltd.) was added as an antiviral agent per 100 parts by mass of the resin composition constituting the surface-protecting layer used in Example 1.

The decorative sheet produced in Example 8 was evaluated for the following characteristic.

Antiviral Performance

An antiviral performance test was performed on the decorative sheet produced in Example 8 by a method according to the antiviral test method (ISO 21702), and the antiviral activity against influenza virus was evaluated based on the following evaluation criteria. The evaluation criteria are as follows.

+: an antiviral activity of 2.0 or more
-: an antiviral activity of less than 2.0

The results are shown in Table 3.

Table 3

| | | | Example 8 |
|---|---|---|---|
| Surface-protecting layer | Thickness (μm) | | 13 |
| | Resin (parts by mass) | Bifunctional C | 100 |
| | Fine particles | Type | Silica |
| | | Mode diameter (μm) | 20 |
| | | Addition amount (parts by mass) | 18 |
| | Antiviral agent | Type | Phosphate glass silver-supported compound |
| | | Addition amount (parts by mass) | 3 |
| Evaluation | Antiviral performance | | + |

Example 9

A decorative sheet was produced in the same manner as in Example 1, except that an anti-allergic anionic phenolic material (EXP20530A, produced by DIC Corporation) and an anti-allergic zinc-based material (EXP20530B, produced by DIC Corporation) were added as anti-allergen agents to the resin composition constituting the surface-protecting layer used in Example 1. The anionic phenolic material and zinc-based material were added so that the solid content ratio of each material was 23 mass% based on 100 mass% of the resin composition constituting the surface-protecting layer containing the anionic phenolic material and the zinc-based material.

The decorative sheet produced in Example 9 was evaluated for the following characteristic.

Anti-Allergenic Performance

The anti-allergenic performance of the decorative sheet produced in Example 9 was evaluated. Specifically, the decorative sheet produced in Example 9 was finely cut and immersed in an aqueous mite allergen solution for 1 day, and the amount of allergen was then visually confirmed by a horizontal development chromatography (Mighty Checker) and evaluated according to the following evaluation criteria. The evaluation criteria are as follows.

+: A decrease in the amount of allergen was confirmed (mite allergen level determination was below + determination (i.e., about 100 mites/m$^2$ or less))
-: A decrease in the amount of allergen was not confirmed (mite allergen level determination exceeded + determination)

The results are shown in Table 4.

Table 4

| | | | Example 9 |
|---|---|---|---|
| Surface-protecting layer | Thickness (μm) | | 13 |
| | Resin (parts by mass) | Bifunctional C | 100 |
| | Fine particles | Type | Silica |
| | | Mode diameter (μm) | 20 |
| | | Addition amount (parts by mass) | 18 |
| | Anti-allergen agents | Type | Anionic phenolic material |
| | | Addition amount (mass%) | 23 |
| | | Type | Zinc-based material |
| | | Addition amount (mass%) | 23 |
| Evaluation | Anti-allergenic performance | | + |

From the difference in color density of the checker, it was confirmed that the decorative sheet of Example 9 had anti-allergenic performance.

Example 10

A resin layer made of polypropylene resin was laminated on the back surface of the decorative sheet produced in Example 1 by a melt-extrusion lamination method to form a backer layer having a thickness of 120 μm. Further, after corona discharge treatment was applied to the back surface of the backer layer, a back-side primer layer (thickness: 2 μm) was formed to produce a decorative sheet, and a decorative plate was produced in the same manner as in Example 1.
The decorative plates produced in Examples 1 and 10 were evaluated for the following characteristic.

Impact Resistance (DuPont Impact Test)

The impact resistance was tested according to JIS K5600-5-3: 1999 (General test method for paints, Part 5: Mechanical properties of coating films, Section 3: Falling weight test). Specifically, a weight of 500 g was dropped from a height of 30 cm onto the surface of each of the decorative plates of Examples 1 and 10. Using 9 samples per test, the number of samples that were cracked out of the 9 samples and depression were visually evaluated. The evaluation criteria are as follows. A score of + or higher is evaluated as having no problems in practical use.

++++: No samples were cracked.
+++: One or two samples were cracked, and depression was unnoticeable.
++: One or two samples were cracked.
+: Three to eight samples were cracked.
-: All the samples were cracked.

The results are shown in Table 5.

Table 5

| | | | Example 1 | Example 10 |
|---|---|---|---|---|
| Surface-protecting layer | Thickness (μm) | | 13 | 13 |
| | Resin (parts by mass) | Bifunctional C | 100 | 100 |
| | Fine particles | Type | Silica | Silica |
| | | Mode diameter (μm) | 20 | 20 |
| | | Addition amount (parts by mass) | 18 | 18 |
| Backer layer | Resin | | - | Polypropylene resin |
| | Thickness (μm) | | - | 120 |
| Evaluation | Impact resistance | | ++ | +++ |

Compared with the decorative sheet of Example 1, the depression of the decorative sheet of Example 10 became less noticeable, confirming that the impact resistance of the decorative sheet of Example 10 was further improved.

Reference Signs List

1. Decorative sheet for floors
2. Back-side primer layer
3. Base material sheet
4. Picture pattern layer
5. Adhesive layer
6. Transparent resin layer
7. Primer layer
8. Surface-protecting layer
9. Embossed pattern (wood-grain vessel pattern)

**Claims**

1.  A decorative sheet having a surface-protecting layer on its outermost surface,

    (1) the surface-protecting layer having a Martens hardness of 30 to 170 N/mm$^2$, the Martens hardness being a value measured in such a manner that when the surface-protecting layer contains fine particles, a diamond indenter is pressed into a position avoiding the fine particles to measure the Martens hardness of a cross-section,
    (2) the surface-protecting layer having irregularities, the irregularities having an embossed shape with a pebbly pattern, a wood-grain pattern, a wooden pattern, a marble grain pattern, or a leather pattern, and the irregularities having an average interval Sm of 180 μm to 950 μm,
    (3) the surface-protecting layer having a maximum height Rz of 10 to 45 μm, and
    (4) the surface-protecting layer having a ratio of the area of a portion from the surface to a depth of 30 μm of 40% or more.

2.  The decorative sheet according to claim 1, which has a Martens hardness of 70 to 150 N/mm$^2$.

3.  The decorative sheet according to claim 1 or 2, wherein Rz is 10 to 19 μm.

4.  The decorative sheet according to any one of claims 1 to 3, wherein Sm is 450 to 750 μm.

5.  The decorative sheet according to any one of claims 1 to 4, wherein the surface-protecting layer has a ratio of the area of a portion higher than a depth of 30 μm from the surface of 50 to 90%.

6.  The decorative sheet according to any one of claims 1 to 5, wherein the surface-protecting layer has a ratio of the area of a portion higher than a depth of 30 $\mu$m from the surface of 60 to 85%.

7. The decorative sheet according to any one of claims 1 to 6, wherein the surface-protecting layer comprises an ionizing radiation-curable resin.

8. The decorative sheet according to any one of claims 1 to 7, wherein the surface-protecting layer has a thickness of 10 to 40 $\mu$m.

9. The decorative sheet according to any one of claims 1 to 8, wherein the surface-protecting layer comprises at least one member selected from the group consisting of antibacterial agents, antiviral agents, and anti-allergen agents.

10. The decorative sheet according to any one of claims 1 to 9, which has a picture pattern layer, a transparent resin layer, and the surface-protecting layer in sequence on a base material sheet.

11. The decorative sheet according to any one of claims 1 to 9, which has a picture pattern layer, a transparent resin layer, and the surface-protecting layer in sequence on a base material sheet, wherein at least a backer layer is laminated on a back surface of the base material sheet.

12. A decorative plate comprising the decorative sheet according to any one of claims 1 to 11 on a base material.

13. The decorative plate according to claim 12, wherein the base material is a single wood panel, a plywood panel, a wood fiberboard, or a particleboard.

EP 4 316 810 A1

Fig. 1

23

Fig. 2

$$d = \frac{d1 + d2}{2}$$

(a)

Martens hardness (HM hardness) $[N/mm^2] = F/A$

(b)

(c)

Fig. 3

Measured cross-sectional curve

Fig. 4

Fig. 5

Fig. 6

Fig. 7

Measured cross-sectional curve

Fig. 8

Fig. 9

Fig. 10

Fig. 11

Measured cross-sectional curve

Fig. 12

Fig. 13

Fig. 14

## INTERNATIONAL SEARCH REPORT

| International application No. |
|---|
| **PCT/JP2022/012868** |

**A.    CLASSIFICATION OF SUBJECT MATTER**

*B32B 27/00*(2006.01)i; *B32B 3/30*(2006.01)i; *E04F 15/02*(2006.01)i
FI:    B32B27/00 E; B32B3/30; E04F15/02 A; E04F15/02 C

According to International Patent Classification (IPC) or to both national classification and IPC

**B.    FIELDS SEARCHED**

Minimum documentation searched (classification system followed by classification symbols)

B32B1/00-43/00; E04F15/00-15/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2017-43106 A (DAINIPPON PRINTING CO., LTD.) 02 March 2017 (2017-03-02) claims 1, 6, paragraphs [0002], [0008], [0012]-[0015], [0019]-[0022], [0025], [0031], [0036], [0037], [0040]-[0049], [0052], [0053],[0058]-[0060], [0066], [0067], [0081]-[0086], [0094], [0098]-[0101], [0107]-[0110], [0125], [0126], fig. 3 | 1-13 |
| A | JP 2017-82582 A (DAINIPPON PRINTING CO., LTD.) 18 May 2017 (2017-05-18) entire text, all drawings | 1-13 |
| A | JP 2017-145583 A (TOPPAN PRINTING CO., LTD.) 24 August 2017 (2017-08-24) entire text, all drawings | 1-13 |
| A | JP 2012-215064 A (DAINIPPON PRINTING CO., LTD.) 08 November 2012 (2012-11-08) entire text, all drawings | 1-13 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/012868**

| Patent document cited in search report | | | Publication date (day/month/year) | Patent family member(s) | Publication date (day/month/year) |
|---|---|---|---|---|---|
| JP | 2017-43106 | A | 02 March 2017 | (Family: none) | |
| JP | 2017-82582 | A | 18 May 2017 | (Family: none) | |
| JP | 2017-145583 | A | 24 August 2017 | (Family: none) | |
| JP | 2012-215064 | A | 08 November 2012 | (Family: none) | |

Form PCT/ISA/210 (patent family annex) (January 2015)

## EP 4 316 810 A1

**Patent documents cited in the description**

- JP 6606901 B